# EUROPEAN PATENT APPLICATION

(11) **EP 3 663 073 A1**
(43) Date of publication of application: **10.06.2020**
(21) Application number: 18211188.0
(22) Date of filing: 07.12.2018
(51) Int. Cl.: B29C 64/106, B29C 64/118, B29C 64/209, B29C 64/295

(54) **3D PRINT HEAD SYSTEM WITH COMBINED PROCESSING PORTIONS AND AN INTEGRALLY INTEGRALLY FORMED PROCESSING CHANNEL FOR ADDITIVE MANUFACTURING**

(71) Applicant: Northoff, Jan, 10439 Berlin (DE)
(72) Inventor: NORTHOFF, Jan, 10439 Berlin (DE); NORTHOFF, Jan, 10439 Berlin (DE); RODAT, Christian, 13125 Berlin (DE)

(57) **Abstract**

The invention relates to a 3d print head system (10) for additive manufacturing, particularly for fused filament fabrication, the system (10) comprising a processing channel (7) with an integrally formed channel wall for guiding an extrudable print compound, wherein said processing channel (7) extends at least through the following processing portions (4,5,6) of the system, a) A cooling portion (4) for cooling the print compound, b) A heating portion (5) for heating and melting the print compound, c) An extrusion portion (6) comprising an opening (75) of the processing channel (7) for releasing the print compound from the channel (7), wherein the channel wall is integrally formed with the processing portions (4,5,6) a) to c).

The invention furthermore relates to a method for manufacturing the print head system (10) according to the invention.

## Description

### Specification

The invention relates to a 3d print head system for additive manufacturing, particularly for fused filament fabrication.

The invention further relates to a process to melt and extrude materials using an integrally formed, particularly 3D-printed, monoblock, single-pieced multi-staged passageway, e.g. a processing channel, with integrated processing portions for heating and cooling of the print compound.

Furthermore, the invention relates to a manufacturing method for the print head system.

State of the art additive 3d printing systems comprise a variety of components. The additive 3d printer comprises for example a nozzle, a heating block, a heat break and a cooling body. The latter is also referred to as the cold end. In the cold end the printing system pulls and feeds the extrudable print compound particularly in form of a filament from a spool and provides (via the heat break component) it to the so-called hot end. For this purpose the cold end comprises for example a stepper motor or another transport means for controlling the filament feed towards the hot end. The hot end refers to the components nozzle, heating block and heat break. The extrudable compound is heated in the hot end to a degree that it melts and can be extruded at the nozzle. The melted compound is then arranged at a predefined position on the workpiece or the built plate. The hot end with the nozzle is movably arranged such that it can be moved three-dimensionally in space.

The Nozzle is always build as an exchangeable component, and has an opening downstream of the extrusion direction. The opening is typically round and has a diameter between 0.3 mm and 1.0 mm. This also has disadvantages as described below.

A problem in many additive printing systems is that the hot end suffers from clogging and uneven extrusion during printing and temperature fluctuations due to temperature disturbance created by the cooling system for the printed part, also referred to active cooling, or/and insufficient cooling of the cooling body.

This is due to the difficulty to provide a precise control and setting of the temperature in the cooling body, i.e. the cold end. In case the temperature is too high, e.g. because the cooling body does not dissipate enough heat from the extrudable print compound, the print compound softens upstream of the hot end and forms a clot that gets stuck in the cold end, typically in the cooling body.

Therefore, the heat break is usually made of a thermally insulating material that reduces the heat flow between the hot end and the cold end (typically stainless steel). Most systems even use additional teflon (PTFE) tubing for greater insulation. Another factor leading to clogging of state of the art print head systems are edges, burrs scratches and the like inside the print head. These edges are for example formed at the joining portion of different components, e.g. the cooling body, the heat break (sometimes with teflon (PTFE) tubing), and the nozzle.

Small edges, burrs and the like form at these joining portions particularly due to manufacturing tolerances. At these edges, the extrudable print compound can be caught and cause an impaired printing performance and in the worst case even clog the print head, typically at the junction between heat break and cooling body. Moreover, as the different components of the print head system consist of different alloys or polymers, these edges occur due to the adjoining different component exhibiting different thermal expansion coefficients. For example, the heat break is often formed from stainless steel (sometimes with a teflon (PTFE) inlay), while the cooling body is typically made from aluminium, and the nozzle is typically made from brass, hardened or stainless steel.

Furthermore, heat stemming from the heating block of the hot end heats the cooling body, which increases the problem of temperature control inside the filament channel, especially around the heat break.

Moreover, the dissipated heat from the heating block increases the temperature of the surrounding of the heating block, such that a processed workpiece can suffer from the increased temperature of the surrounding, e.g. due to repeated melting, when the print head comes close or due to a slow cooling rate for newly extruded printing compound.

The heating block of the hot end is usually heated with a cartridge. This in turn leads to an error-prone temperature estimation for the hot end and to an inertia with regard to heating and cooling of the hot end.

Some problems are for example caused by heat transitions between the heating element, for example a heating wire, and the cartridge comprising the heating element, between the cartridge and the heating block as well as between the heating block and the nozzle.

The use of a single cartridge always causes an asymmetric heating of the nozzle, which can influence the melting properties of the print compound with regard to the extrudable compound.

The combination of all these factors limits the scalability and print quality of state of the art 3d print head systems, such that a larger volume and steady flow of the extrudable compound cannot be facilitated, which in turn leads to limitations of printing speed and print quality

An object of the present invention is to provide a system for additive manufacturing that overcomes the described problems of conventional print head systems.

The object is achieved by the device having the features of claim 1.

Advantageous embodiments are described in the subclaims.

According to claim 1, a 3d print head system for additive manufacturing, particularly for fused filament fabrication, the system comprises a processing channel, also referred to as passageway in the specification, with an integrally formed channel wall for guiding an extrudable print compound, wherein said processing channel extends at least through the following processing portions of the system,
a) A cooling portion for cooling the print compound,
b) A heating portion for heating and melting the print compound,
c) An extrusion portion comprising an opening of the processing channel for releasing the print compound from the channel,
wherein the channel wall is integrally formed with the processing portions a) to c).

The integrally formed channel wall causes the processing channel to be integrally formed with the processing portions a) to c).

The processing channel is particularly the channel for receiving and processing the print compound. Forming the channel walls integrally with the processing portions provides the print head system with superior properties and minimizes and even eliminates the problems of conventional print heads laid out above.

According to the invention, the print head system particularly omits main features of conventional print head systems like a separate heating block, a separate heat break, a nozzle and/or a separate cooling body.

The system according to the invention provides an integrally formed processing channel to melt and extrude a print compound in a way that combined, traditional systems cannot provide.

For example there is no separate heating block, heat break nor nozzle. Instead, the processing channel has different functional processing portions for heating and cooling, including a transitioning portion within an integrally formed unit. This allows for a better controllable melting and cooling process as well as higher temperatures for more accurate 3d printing.

The different functional portions and properties of the integrally formed processing channel results from the design in proximate vicinity of the passageway within the monoblock that can be formed by the processing portions a) to c).

The print head system according to the invention allows for a clog-free additive manufacturing. This is particularly achieved by the integrally formed processing channel allowing for guiding and controlling of the print compound, particularly the 3d print filament. The integrally formed processing channel particularly can provide a smooth inner surface, i.e. channel wall, devoid of burrs and edges such that clogging is efficiently prevented.

According to another embodiment of the invention, the processing channel has a cross-sectional wall contour along the processing channels extent, wherein particularly in the extrusion portion the contour of the wall is given by a bezier curve and/or has the contour of a drop, such as to provide an insertion and extrusion geometry that is favorable for the processing and guidance of the print compound. This embodiment allows to extrude the print compound at a well-defined pressure and temperature as well as a well-defined extrusion rate.

According to another embodiment of the invention, the processing channel for the extrudable compound is arranged internally, particularly centrally of at least the processing portions a) to c).

This embodiment allows for a symmetric heating and cooling of the processing channel in the respective processing portions.

According to another embodiment of the invention, the processing portions a) to c) are integrally formed with each other, such that the processing portions a) to c) form a monolithic component of the print head system.
the term "monolithic" particularly refers to a device or a feature that consists and is made of one piece .

The term "monobloc" and "single piece" are used synonymously in the context of the specification. Both terms refer to components or portions that are formed in a single piece only, wherein the monobloc components cannot be taken apart without destruction and wherein the monobloc components are made in a single piece, i.e. they are particularly not joined after the components have been manufactured in single, particularly separate, pieces. This prevents clogging and breaking and is an advantage for assembly.

The term"integrally formed" particularly refers to a feature, a component or a portion that has been formed in a single piece, particularly already during a single manufacturing step.

The terms "upstream" and "downstream" refer to the net processing direction of the extrudable print compound through the print head system during additive manufacturing. The net processing direction points therefore from the cooling portion to the heating portion, particularly to the extrusion portion.

According to another embodiment of the invention, the heating portion is arranged downstream of the cooling portion and upstream of the extrusion portion.

According to another embodiment of the invention, the cooling portion comprises an outlet portion arranged adjointly to an inlet portion of the heating portion.

The print head system according to the invention can be incorporated in a fused filament fabrication printer and similar additive manufacturing devices.

During printing, the extrudable print compound, for example in form of a filament is provided to the cooling portion, particularly to the processing channel at the cooling portion, where the temperature of the extrudable print compound is adjusted to a predefined and particularly selectable and adjustable temperature.

From the cooling portion, the extrudable compound is guided to the heating portion of the print head system.

The processing channel is particularly a channel configured to guide the extrudable component along (forward, i.e. downstream) or opposite (backward, i.e upstream) the processing direction of the extrudable compound.

The processing channel has a diameter that is particularly configured to fit around an extrudable compound, particularly wherein the extrudable compound is a filament with a predefined diameter, particularly wherein the diameter of the filament is 1.75 mm, 2.85 or 3 mm or even larger. Accordingly the diameter of the processing channel is slightly larger, particularly 10% larger, f.ex for 1.75mm filament the processing channel can be 1.9mm-2mm.

According to another embodiment of the invention, the processing channel is arranged centrally along a vertical axis of the heating portion and the cooling portion, wherein the processing channel is a guided channel, wherein particularly the processing channel extends straight or slightly curved along the vertical axis.

This allows for a controlled handling of the extrudable filament and less clogging of the print head system.

According to another embodiment of the invention, the processing channel, particularly the processing channel wall, is manufactured in the processing portions during the manufacturing process, particularly either by directly forming the processing channel or by afterwards drilling the processing channel into the processing portions.

### Using additive manufacturing for fabrication of the invention:

The term "additive manufacturing" particularly refers to methods in which material is joined or solidified under computer control to create a three-dimensional object, here the monobloc system, with material being added together (such as liquid molecules, powder grains or filament being fused together).

Additive manufacturing methods particularly comprise methods such as fused filament fabrication as well as laser sintering methods, and 3d printing.

According to another embodiment of the invention, the 3d print head system is made using an additive manufacturing method.

With an additive manufacturing method it is possible to build a processing channel wall that has a particularly smooth and uniform surface such that the print compound does not cling to the wall of the processing channel.

Additive manufacturing allows adapting the design of the monobloc processing portions particularly without changing injection moulds, which in turn allows for highly flexible print head system designs. This is not possible with print head systems known in the prior art.

### Cooling

According to another embodiment of the invention, the cooling portion comprises an internal fluid channel for a cooling fluid (also referred to as "coolant" in the specification), such as water or cooling liquid, said fluid channel having an inlet and an outlet, particularly wherein the fluid channel is integrally formed with the cooling portion.

Therefore, the fluid channel is part of the processing components and is integrally formed with said portions.

This embodiment allows for an improved heat transfer between the extrudable print compound and the cooling fluid. Moreover, this embodiment allows for a reduced mass of the cooling portion, as no additional cooling means such a tubing has to be arranged around the cooling portion. This embodiment allows the precise heating and cooling of the processing portions.

The integrally formed fluid channel can be arranged or manufactured very closely to the processing channel such that the temperature control is improved and effectively applied.

According to another embodiment of the invention, the fluid channel extends around particularly spirally and in turns around the processing channel.

For example, when the processing channel extends straight or slightly curved along a vertical axis (z-direction), the fluid channel follows a spiral line around the processing channel along the vertical axis. This allows for a maximized heat/cold transfer of the cooling fluid (coolant) to the extrudable compound.

This embodiment allows for a symmetric cooling of the processing channel and thus the extrudable compound, which improves the extruding and print quality.

The term "spirally" particularly refers to a shape of the fluid channel that extends circumferentially around the processing channel, while simultaneously the fluid channel extends along the processing channel. A geometric spiral is therefore one of the possible shapes, however the fluid channel does not need to be circular or curved, but it can be also built with straight sections around the passageway.

The fluid channel has an inlet and an outlet. The outlet is particularly arranged upstream of the cooling portion or at the upper end of the cooling portion, wherein the inlet is particularly arranged downstream the cooling portion or at a lower end of the cooling portion.

This way the coolant flows against the processing direction of the print compound leading to an extremely effective cooling. Inlet and outlet can be exchanged for different thermal requirements, as well as the flow direction can be changed and adjusted for maximised temperature control.

According to this embodiment, for maximal cooling efficiency, the cooling fluid flows from the hot portion towards the receiving portion (for the extrudable compound) of the cooling portion.

According to another embodiment of the invention, the fluid channel comprises tubing connector portions for a cooling fluid tubing, the connector portions extending outwards from the cooling portion wherein the tubing connector portions are particularly integrally formed with the cooling portion .

According to another embodiment of the invention, at an outer shell side of the cooling portion, a connector for a cooling fluid tubing also referred to as coolant tubing in the specification is arranged at the inlet and at the outlet of the fluid channel.

According to another embodiment of the invention, the connectors at the inlet and the outlet of the fluid channel are integrally formed with the processing portions. According to another embodiment of the invention, the print head system comprises a cooling unit that provides the cooling fluid to the cooling portion, particularly wherein the cooling unit is connected to the fluid channel or the connector portions of the fluid channel via an elastic tubing.

### Ceramics are used for 3d printing metals:

According to another embodiment of the invention, the 3D-print head system comprises or consists of a non-inductive material particularly an insulating material, particularly an electrically and/or thermally insulating material, such as a ceramic or a polymer.

According to another embodiment of the invention, the processing portions, particularly the heating portion, comprise or consist of a non-inductive material particularly an insulating material, particularly an electrically and/or thermally insulating material, such as a ceramic or a polymer.

In this case the filament itself should be inductively heatable such that it can be melted within the processing channel, without active heating of the environment, or the heating portion itself.

A processing portion comprising or consisting of a ceramic allows 3D-printing of metal or metal compounds. The metal or metal compound is only heated up inside the channel, and does not lose energy. Ceramics are known to withstand comparably high temperatures that are needed for melting the metal or metal compound. According to this embodiment, the processing channel itself is not heated and is thus kept at a lower temperature than the heated print compound. The heat is only inserted in the meltable, inductively active print compound by induction.

According to this embodiment, the full ceramic version does not stick to the heated up metal and does not react with it. Therefore there is no clogging, and the filament itself can be heated up until it melts. In case of a clog the whole system can be heated up to free the channel, without breaking it.

The ceramic itself insulates the heated up compound from the channel, and this makes it safer for the user, since there are less heated up elements. Heat is only applied where needed.

Also with a ceramic print head system, the whole setup is not electrically conductive, so this also reduces risk to the user and general safety.

Ceramics is not flammable so this reduces also the risk of fire, while dealing with high temperatures.

### Steel is used for printing polymers and compound materials:

According to another embodiment of the invention, the 3d print head system comprises or consists of a metal, particularly a stainless steel, or other materials which are suitable for being heated inductively.

A metal can be heated inductively and provides good to excellent heat conducting properties, such that cooling of the cooling portion and heating of the heating portion can be facilitated conveniently.

Moreover, whilst metals are in use, the heat transfer between coolant in the fluid channel and the filament inside the passageway is sustained.

Stainless steel provides inert properties to the processing portions and allows for manufacturing using additive manufacturing methods, such that the processing portions can be manufactured using an additive manufacturing method.

The metal and particularly the stainless steel processing portions can be used particularly for manufacturing processes that require a particularly high temperature for the extrudable compound, which allows a broad variety of compounds to be used with the invention.

### Multimaterial monoblock:

According to another embodiment of the invention, the particularly integrally formed processing portions comprise more than one material. Heated zones use other materials with optimized thermal behaviors for heat transfer, where the cooling portion uses thermally conductive materials in combination with insulating material, in order to maximize the thermal separation between heating and cooling portion of the 3d print head system, according to this invention.

Furthermore melted metal can be extruded with a configuration, where the heating portion is manufactured out of high temperature resistant ceramics and the cooling portion is manufactured of a thermally conductive material for optimized cooling upstream of the heating portion. This is particularly used when melting metal filament directly with inductive heating, without heating other parts of the 3D-print head system. In this configuration there is a complete absence of the concept of "heating block", and the invention can work with maximised efficiency and fully without heating unnecessary, passive elements.

According to another embodiment of the invention, the processing portions have a uniform and continuous processing channel, wherein the different materials of the processing portions have an absence of breaks, edges and burrs when manufactured with additive manufacturing methods.

### Heat break embodiments:

According to another embodiment of the invention, the print head system comprises a heat break portion that is a transition portion downstream of the cooling portion and upstream of the heating portion.

The heat break portion is particularly comprised by the particularly integrally formed processing portions, i.e. it is integrally formed with the processing portions.

If additively manufactured a heat break portion can include internal structures and cavities, which can be either hollow or filled with unprocessed raw material from manufacturing, eg. metal powder, to increase thermal insulation between heating portion and cooling portion as well as improved heat dissipation away from the filament path.

Furthermore, if manufactured with additive manufacturing, heat flow and dissipation properties of the processing portions can be controlled to a higher degree, such that a more accurate temperature control can be achieved.

The print head system may include internal structures or cavities to improve thermal and/or mechanical properties. Specifically the heat break portion can have multiple separated chambers which are integrally formed to increase thermal separation between heating portion and cooling portion.

### Heating embodiments:

The heating portion of the monoblock, including the extrusion portion can be manufactured in a tube like fashion enabling effective heating particularly by induction.

The integrally formed processing portions provide improved melting properties in the heating portion, particularly in the melting portion of the heating portion as well as improved flow properties of the melted extrudable compound.

The flexibly designable fluid channel and processing channel that is provided by additive manufacturing methods, provides a higher, more efficient and more precise flow of the melted extrudable compound through the melting portion of the heating portion such that a more rapid printing and a uniform print image is achieved.

Not only the heating of the extrudable compound inside the heating portion, but also the cooling or heating of the extrudable compound to a predefined temperature in the cooling portion are achieved in less time. Therefore, particularly temperature dependent properties of the extrudable compound can be used for example to achieve a specific surface structure, optic, appearance, or a mechanical resilience of the print, by using different temperatures for each printing parameter in one layer (sometimes referred to as "Post Processing"). An example for "Post Processing" the "infill" has different temperature settings than the "outline" of a 3d print.

Furthermore, the required energy input can be calculated and simulated in advance, even without the need of a temperature sensor.

### Safety embodiments:

Particularly the combination of the integrally formed processing channel and fluid channel and the inductive heating system provides increased safety of the print head system and an improved print image.

Furthermore, increased safety can for example be achieved by encapsulating the processing portions as well as the induction coil of the heating system in a fireproof, insulating material, such as ceramics or high-temperature silicone.

This way a user of the print head system is protected from hot portions and electricity provided to the print head system.

Therefore, according to another embodiment of the invention, the processing portions are encapsulated in a fireproof and insulating material, particularly an electrically and/or thermally insulating material.

This embodiment also improves the temperature stability of the print head system, particularly of the heating portion and the cold end, as convection-induced dissipation from the surrounding air is omitted.

According to this embodiment, the induction coil is particularly arranged in a non-touching manner, such that the print head system comprises a circumferential gap between the heating portion/melting portion and the induction coil. This way the extrusion portion and the melting portion can be effectively cooled and temperature controlled (f.ex. for post processing).

Alternatively the induction coil can be fixed to the heating portion or the melting portion of the heating portion. However, with this setup, the induction coil has to be fixed electrically insulating, such that no electric current can directly flow between the heating portion and induction coil.

This way, rapid and precise heating is achieved.

### Alternating current generator embodiments:

According to another embodiment of the invention, the heating system comprises an alternating current generator electrically connected to the induction coil for supplying the induction coil with electricity, particularly wherein the alternating current generator is configured to provide a selected and particularly adjustable alternating current, wherein the current is adjustable in frequency and/or in magnitude/amplitude. With the alternating current generator a heating of the melting portion can be achieved and controlled. When the alternating current generator is configured to adjust the frequency or the magnitude of the electric current, the heating characteristics of the print system can be adjusted such that rapid heating and precise temperature control is possible.

The magnitude of the electric current is for example given by its amplitude or by the energy that can be provided to the induction coil.

### Temperature sensor embodiments:

According to another embodiment of the invention, the 3d print head system comprises a temperature sensor, particularly a thermistor, wherein the temperature sensor is configured and arranged for sensing a temperature of the heating portion, particularly a temperature of the inlet of the heating portion and/or the extrusion portion.

The temperature sensor is particularly attached to the heating portion in a thermally conductive manner, such that the temperature sensor can sense the temperature at the heating portion.

While the temperature sensor might not measure the actual temperature at the melting portion, e.g. because the temperature sensor is attached to the inlet portion and/or the extrusion portion of the heating portion that is not circumferenced by the induction coil and therefore might exhibit a different temperature, it is easily possible to relate the temperature measured at the position of the temperature sensor to the temperature in the melting portion,e.g. by means of a calibration measurement. According to another embodiment of the invention, the heating portion, particularly the inlet portion of the heating portion comprises a recess for receiving a temperature sensor, wherein the recess is particularly arranged outside the portion enclosed by the inductive coil of the inductive heating system, wherein the recess is particularly arranged at the upstream or downstream end of the induction coil. The setup with the recess downstream end of the induction coil, is not shown.

The portion that is enclosed by the induction coil is particularly the melting portion of the heating portion.

The recess is for example handle-, or cup-shaped such that the temperature sensor can be mounted using the recess.

### PID Controller embodiments:

The term "PID" stands for proportional-integral-differential.

The PID controller allows for rapid and precise adjustment and stabilization of the temperature at the heating portion, particularly in the melting portion.

According to another embodiment of the invention, the system comprises a PID controller, wherein the PID controller is connected to the temperature sensor such that a signal from the temperature sensor is obtainable by the PID controller and wherein the PID controller is configured and arranged to control the alternating current generator so as to adjust the heating of the heating portion, particularly the melting portion of the heating portion.

According to another embodiment of the invention, the print head system comprises a PID controller used specifically in combination with inductive heating.

### Multimaterial embodiments:

According to another embodiment of the invention, the processing channel branches in a plurality of passageways in the receiving portion of the cooling portion such that a plurality of filaments comprising the extrudable compound can be fed into the cooling portion simultaneously.

According to this embodiment a change of the extrudable compound material can be facilitated quicker with less rearranging of the print system.

Moreover, different materials and/or colored filaments can be used at the same time.

### Additions:

For example, in comparison to 3d print heads known from the state of the art, the 3d print head system according to the invention does not comprise a separate heat break component.

According to another embodiment of the invention the 3d print head itself can be understood as a heat break function. The invention itself acts as a defined divider between hot and cold.

The print head system can comprise more components than the ones disclosed here. This would be typically a mount for the axis of a 3D-printer (also monoblock, also comprising the processing portions a) to c)), a cooling section particularly for cooling the printed part (active cooling), and possible additional nozzle or adapter mounts downstream the extrusion portion.

The print head system particularly comprises components that are not directly attached to the print head system, e.g. the induction heating device.

According to another embodiment of the invention, the print head system according to any one of the preceding claims, wherein the extrusion portion is configured to receive an extrusion end piece, such as a nozzle unit, with a predefined opening shape and opening size, wherein the extrusion end piece is configured to release and print the melted print compound through the extrusion end piece opening, particularly wherein the extrusion end piece comprises means for releasably attaching said end piece to the extrusion portion, particularly wherein the extrusion end piece is formed as a nozzle.

According to another embodiment of the invention, a method for a defined extrusion of a meltable print compound by cooling and heating processing steps performed in the 3d print head system according to one of the embodiments of the invention comprises the steps of:
a) tempering,e.g. cooling the print compound in the processing channel to a predefined cooling temperature in the cooling portion of the print head system,
b) melting the print compound in the processing channel to a predefined heating temperature in the heating portion, particularly by the inductive heating system,
c) releasing the melted print compound from the processing channel at the opening of the extrusion portion or at the extrusion end piece opening,
wherein the print compound is a polymer and / or a compound comprising or consisting of metal.

According to another embodiment of the invention, the temperature at the extrusion portion or the heating portion is measured by a temperature sensor at the heating or extrusion portion or wherein the temperature is determined from a lookup table that comprises an information about the heating current for the heating system and the resulting temperature at the heating portion or the extrusion portion.

### Figure description

In the following the invention is detailed by means of figures depicting the exemplary embodiments of the invention. It is shown in
Fig. 1 a side view of a print system comprising a print head system according to the invention;
Fig. 2 various views and cross-sections of a print head system according to the invention;
Fig. 3 multi-material print heads;
Fig. 4 cross-sectional view of the extrusion portions, showing the bezier- or drop-like contour of the processing channel wall.

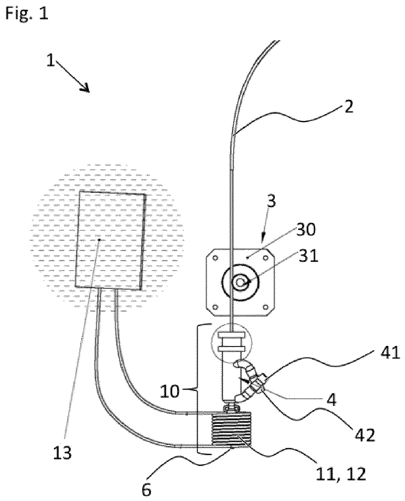

In Fig. 1 a schematic view of a print system 1 for additive manufacturing is shown. The 3D-print system 1 comprises a print head system 10 according to the invention. A filament 2 for additive manufacturing is fed by a feeding system 3 into the print head system 10. The filament 2 consists, for example of a polymer, that can be melted by increasing its temperature. Once cooled down again below the melting temperature of the polymer, the polymer solidifies again. The filament 2 has a diameter in the range of millimeters and is rather flexible.

The feed system 3 consists of a feed assembly comprising a stepper motor 30 and a toothed gear 31 that is arranged to pull the filament 2 into the feed system 3 and to push the filament 2 into the print head system 10. By controlling the stepper motor 30, the feeding speed and direction of the feeding can be adjusted. Therefore, it is also possible to retract the filament 2 from the print head system 10.

The feed system 3 is arranged fixedly with respect to the print head system 10 and is moved together with the 3d print head system 10, or 3 is fixed and the filament is fed through tubing (typically telfon) to 10 (normally referred to Bowden Extruder) .

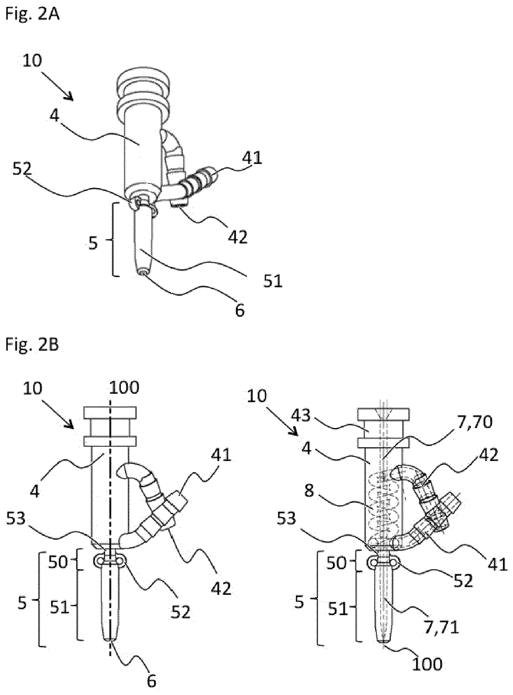

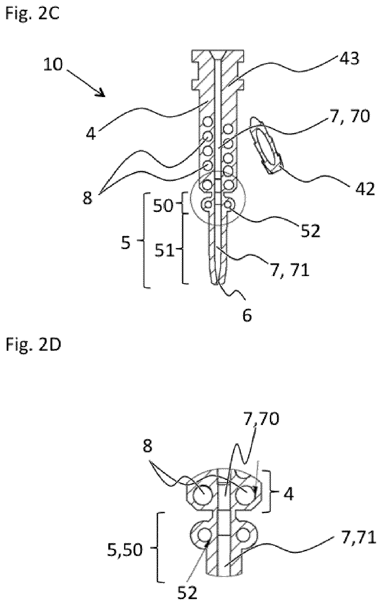

The print head system 10 comprises a cooling portion 4 and a heating portion 5 that are made in a single piece, i.e they are integrally formed. An extrusion portion 6 is located at the lower end of the heating portion 5 (see e.g. Fig.2A). At the extrusion portion 6, the melted filament 2 is extruded to the workpiece or to the built plate (not shown). The processing portions comprise a cooling portion 4, a heating portion 5 and a extrusion portion 6.The filament 2 is fed into a receiving portion 43 of the cooling portion 4, where the filament 2 is cooled or heated to a predefined temperature. The cooling portion 4 comprises a first portion 70 of a monobloc passageway 7 (see e.g. Fig. 2) that is configured to guide the filament 2 through the cooling portion 4.

The cooling portion 4 further comprises an internal fluid channel 8 (see e.g. Fig. 2) wound around the first portion 70 of the passageway 7 in the cooling portion 4, wherein the fluid channel 8 can be provided with a coolant (not shown). The coolant is fed for example via a flexible tubing (not shown) into a first connector 41 at the cooling portion 4. From there, the coolant flows through the fluid channel 8, cools, heats or stabilizes the temperature of the filament 2 in the cooling portion 4.

The coolant exits the cooling portion 4 via a second connector 42. The connectors 41,42 are also integrally formed with the cooling portion 4, such that also the connectors 41, 42 are part of the monobloc components 4,5,6.

Inside the cooling portion 4, the passageway 7 extends straight down, i.e. downstream towards the heating portion 5 where it connects monobloc to a portion of the passageway 71 (see e.g. Fig.2) that extends straight through the heating portion 5 towards the extrusion portion 6.

The cooling portion 4 meets the heating portion 5 at an inlet portion 50 (see e.g. Fig.2B) of the heating portion 5. Downstream of the inlet portion 50 a melting portion 51 of the heating portion 5 is located. The melting portion 51 is enclosed by a induction coil 11 of an inductive heating system 12 and therefore not visible in this figure. The inlet portion 50 of the heating portion 5 is not enclosed by the induction coil 11.

The inlet portion 50 of the heating portion 5 comprises two recesses 52 for a temperature sensor in form of a thermistor (not shown), wherein the recesses 52 are formed monobloc with the heating portion 5. As the thermistor is arranged in one or both recesses 52 outside the induction coil 11 it is less receptive for electromagnetic noise induced by the induction coil 11.

The inlet portion 50 of the heating portion 5 comprises a smaller outer diameter than the cooling portion 4 and the melting portion 51 of the heating portion 5. This tapering of the heating portion 5 at the inlet portion 50 serves as a heat break as it reduces the heat flow from the heating portion 5 through the inlet portion 50 towards the cooling portion 4. This allows a sharper temperature transition between the cooling portion 4 and the heating portion 5.

The induction coil 11 is wound around the melting portion 51 of the heating portion 5 and leaves the extrusion portion 6 comprising the exit opening of the passageway 7 free.

The induction coil 11 is connected to an alternating current generator 13 that controls the strength and the frequency of the induction current at the induction coil 11.

The filament 2 is melted in the portion of the passageway 71 that extends through the melting portion 51 of the heating portion 5.

By controlling the pressure inside the heating portion 5 (e.g. via the feed system 3) and particularly at the extrusion portion 6, the melted filament 2 forms a drop that can be brought onto the workpiece or the built plate, such that 3D-printing is facilitated. The cooling portion 4, the connectors 41,42, the heating portion 5, the extrusion portion 6 as well as the passageway 7 are formed in one piece and are manufactured by an additive manufacturing method.

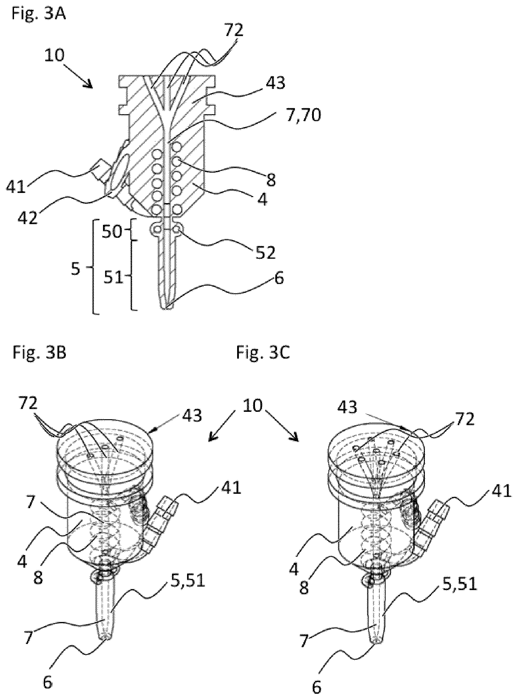

In Fig. 2 the monobloc components, extrusion portion 6, heating portion 5, and cooling portion 4 of the print head system 10 are shown. These monobloc components 4,5,6 particularly form the print head of the print head system 10. Components of the print head or features that are not described here, have been described in Fig. 1 already and the description applies also for Fig. 2, where applicable. The same applies vice versa for Fig. 1 and Fig. 3.

In Fig. 2A a perspective view of the 3d print head system 10 is shown, whereas in Fig. 2B a side view of the 3d print head system is shown. The 3d print head system extends along a vertical axis 100 (see e.g. Fig. 2B and Fig. 2C). The passageway 7 and the extrusion portion 6 are arranged centrally on the vertical axis 100. The passageway 7 extends continuously along the vertical axis 100.

The print head is essentially rotational symmetric to the vertical axis 100, except the recesses 52 for the thermistor and the spiral-shaped fluid channel 8. The heating portion 5 is formed by a comparably slim, essentially cylindrical body that comprises a portion of the passageway 7. The cylindrical body essentially forms the melting portion 51 around which the induction coil 11 is arranged (not shown). The extrusion portion 6 is arranged at the outlet portion (lower end, downstream of the heating portion) of the melting portion 51. The size and shape of the extrusion portion opening defines the characteristics of the print head.

The passageway 7 is tapered at the extrusion portion 6 with respect to the inlet portion 50 of the heating portion 5, such that a small extrusion portion opening is achieved, which allows for precise printing.

In Fig 2B left panel, a side view of the print head is shown and for better illustration on the right panel of Fig. 2B a corresponding transparent side view of the print head is shown.

In the transparent side view in Fig. 2B and in the cross-sectional view in Fig. 2C, the fluid channel 8 and the passageway 7 for the filament 2 can be clearly identified. The fluid channel 8 spirals from the first connector 41 upstream towards the second connector 42 around the continuous passageway 7,70. The windings of the fluid channel 8 are situated close to the passageway 7 such that an optimized heat transfer is achieved.

The coolant provided via the first connector 41 thus flows from the most downstream end of the cooling portion 4 towards the receiving portion 43 of the cooling portion 4 which allows for a homogenous temperature profile in the cooling portion 4.

Except for the fluid channel 8 and the passageway 7, the print head is solid and massive, made of e.g. stainless steel or ceramics.

The recesses 52 for the thermistor are also visible.

In Fig. 2D a detailed view in form of a cross-section of the inlet portion 50 of the heating portion 5 is shown. There, the fluid channel 8 in the cooling portion 4 as well as the recesses 52 for the thermistor arranged on the inlet portion 50 of the heating portion 5 can be seen.

The inlet portion 50 has a tapered section 53 with a reduced outer diameter facilitating a reduced heat flow from the heating portion 5 to the cooling portion 4, emulating a heat break function

In Fig. 3A and Fig. 3B two different views of a print head with a branched passageway 72 at the receiving portion 43 of the cooling portion 4 are shown. In the receiving portion 43 three branches 72 of the passageway 7 are formed such that up to three different filaments (not shown) can be fed, particularly with three different feeding systems (not shown), into the print head. The three branches 72 unite at the cooling portion 4 such that an efficient cooling of the respective filament is achieved. In case a different filament is to be used, the actual filament in the print head can be retracted until the passageway portion 70 is free for receiving the different filament. As this print head due to its monobloc structure can efficiently cool down the filament in the cooling portion 4, a change of the filament can be performed comparably fast. As another embodiment of the invention according to claim 12, in a parallel multi channel setup, multiple filaments are fed simultaneously (now shown).The multi-filament print head according to Fig. 3A and B can be advantageously used for multi-filament printing.

In Fig. 3C an embodiment of a multi-filament print head is shown that can host seven different filaments at the same time. For this purpose the passageway 7 branches in seven different branches 72 in the receiving portion 43 of the cooling portion 4 that unite downstream inside the cooling portion 4.

The other components and features of the print head of Fig. 3 have already been described in the previous figures.

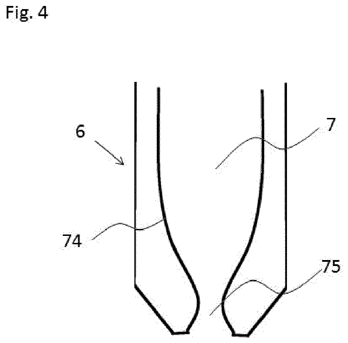

Fig. 4 shows a cross-sectional view of the extrusion portion 6, such that the contour of the processing channel wall 74 can be seen. In the shown case the processing channel wall 74 has an axially symmetric bezier curve or droplet form. the processing channel 7 has an opening 75 for extruding the print compound.

## Claims

1. A 3d print head system (10) for additive manufacturing, particularly for fused filament fabrication, the system (10) comprising a processing channel (7) with an integrally formed channel wall for guiding an extrudable print compound, wherein said processing channel (7) extends at least through the following processing portions (4,5,6) of the system,
a) A cooling portion (4) for cooling the print compound,
b) A heating portion (5) for heating and melting the print compound,
c) An extrusion portion (6) comprising an opening (75) of the processing channel (7) for releasing the print compound from the channel (7),
wherein the channel wall is integrally formed with the processing portions (4,5,6) a) to c).

2. The print head system (10) according to claim 1, wherein the processing portions (4,5,6) a) to c) are integrally formed with each other, such that the processing portions (4,5,6) a) to c) form a monolithic component of the print head system (10).

3. The print head system (10) according to any one of the preceding claims, wherein the processing portions (4,5,6) a) to c) and the channel wall are made using an additive manufacturing method.

4. The print head system (10) according to any one of the preceding claims, wherein the cooling portion (4) comprises an internal fluid channel (8) having an inlet and an outlet for a cooling fluid, wherein the fluid channel (8) comprises a fluid channel wall that is integrally formed with the cooling portion (4), particularly wherein the fluid channel (8) extends around the processing channel (7), particularly wherein the fluid channel (8) extends spirally around the processing channel (7).

5. The print head system (10) according to any one of the preceding claims, wherein the print head system (10) comprises a heating system (12), wherein the heating system (12) is an inductive heating system (12) comprising an induction coil (11) arranged such at the heating portion (5) such that the heating portion (5) and/or an inductively heatable print compound in the heating portion can be heated inductively by the heating system (12).

6. The print head system (10) according to claim 5, wherein the induction coil (11) is embedded in a ceramic or a silicone of the heating system (12), particularly wherein the heating system (12) is attached to the heating portion.

7. The print head system (10) according of any one of the preceding claims, wherein at least the processing portions (4,5,6) a) to c) comprise or consist of a metal, particularly a ferritic stainless steel or an inductively heatable high melting compound, such as an electrically and thermally conductive compound.

8. The print head system (10) according to any one of the claims 5 to 6, wherein at least the processing portions (4,5,6) a) to c) comprise or consist of a compound that cannot be heated inductively, particularly an insulating compound, particularly ceramics, such as that the inductive heating system transfers its heating energy directly to an inductively heatable print compound in the heating portion (5).

9. The print head system (10) according to any one of the claims 5 to 8, wherein the heating system (12) comprises an alternating current generator (13) connected to the induction coil (11) for supplying the induction coil (11) with electricity, particularly wherein the alternating current generator (13) is configured to provide a selected and particularly adjustable alternating current, wherein the current generator is controlled by a PID loop, wherein the PID loop is configured to control the heating.

10. The print head system (10) according to any one of the preceding claims, wherein at least the heating portion (5), particularly the processing portions (4,5,6) a) to c), are configured to be heated up to 750 degrees Celsius, wherein at least the cooling portion (4), particularly the processing portions a) to c), are configured to be particularly efficiently cooled down to -30 degrees Celsius, particularly wherein said temperatures allow for handling and melting of print compounds that require high temperatures for melting particularly metals and composite materials.

11. The print head system (10) according to any of the preceding claims, wherein the processing channel (7) has a cross-sectional wall contour along the processing channel's extent, wherein particularly in the extrusion portion (6) the contour of the processing channel wall is given by a bezier curve and/or has the contour of a drop, such as to provide an insertion and extrusion geometry that is favorable for the processing and guidance of the print compound.

12. The print head system (10) according to any of the preceding claims, wherein the processing channel (7) is either forked at a receiving portion (72) of the processing channel (7), such as to feed a plurality of print compounds into the processing portions (4,5,6), particularly in a sequential fashion, or wherein the print head system (10) comprises a plurality of processing channels such as to feed a plurality of print compounds into the processing portions (4,5,6), particularly in a parallel fashion.

13. The print head system (10) according to any of the preceding claims, wherein the processing channel (7) is devoid of a seam, such as a welding seam or a adhesive seam.

14. The print head system (10) according to any one of the preceding claims, wherein the heating portion (5) is devoid of active heating elements and wherein heating system is arrangeable removably and contact free at the heating portion (5), wherein heating of the extrudable compound in the processing channel (7) is facilitated only by the heating system.

15. Method for manufacturing a print head system (10) according to one of the preceding claims, wherein the method is a an additive manufacturing method, and wherein the print head system (10), particularly the processing portions (4,5,6) as well as the processing channel (7) and particularly the fluid channel (8) are manufactured with the additive manufacturing method as a single piece.
